# EUROPÄISCHE PATENTSCHRIFT

(11) **EP 3 915 388 B1**
(45) Veröffentlichungstag und Bekanntmachung des Hinweises auf die Patenterteilung: **01.11.2023**
(21) Anmeldenummer: 21175755.4
(22) Anmeldetag: 25.05.2021
(51) Int. Cl.: A23G 1/00, A23G 1/12, A23G 1/16

(54) **CONCHIERANORDNUNG**
CONCHING ARRANGEMENT
AGENCEMENT DE CONCHAGE

(30) Priorität: 25.05.2020 DE 102020113943
(43) Veröffentlichungstag der Anmeldung: 01.12.2021
(73) Patentinhaber: Hamburg Dresdner Maschinenfabriken Verwaltungsgesellschaft mbH, 01239 Dresden (DE)
(72) Erfinder: Lohmüller, Tobias, 71691 Freiberg am Necker (DE)
(74) Vertreter: terpatent Patentanwälte ter Smitten Eberlein-Van Hoof Rütten Daubert

(56) Entgegenhaltungen:
- EP-A1- 3 241 449
- EP-A1- 3 827 670
- EP-B1- 0 879 562
- WO-A1-2018/196970
- WO-A2-2019/018285
- DE-A1- 19 644 271
- US-A- 5 814 362
- US-A1- 2019 373 910
- KUCHMENKO T A ET AL: "Using Chemical Sensors in Process Control: Formation of Confectionery Mass Aroma", JOURNAL OF ANALYTICAL CHEMISTRY, CONSULTANTS BUREAU. NEW YORK, US, Bd. 76, Nr. 7, 1. Juli 2020 (2020-07-01), Seiten 881-890, XP037497834, ISSN: 1061-9348, DOI: 10.1134/S1061934821070078 [gefunden am 2021-07-03]

## Beschreibung

Die Erfindung betrifft eine Conchieranordnung für eine Schokoladenmasse mit einer Gehäuseanordnung, in der mindestens ein Knet- bzw. Rührwerk zum Einbringen von Scherkräften in die Schokoladenmasse durch mindestens eine Antriebsmaschine antreibbar gelagert ist, wobei die Gehäuseanordnung eine verschließbare Schokoladenzufuhröffnung, mindestens eine Zutatenöffnung, mindestens eine zeitweise zu öffnende Frischluftöffnung und mindestens eine zeitweise zu öffnende Prozessgasöffnung aufweist, wobei mindestens eine Messanordnung zur Qualitätsermittlung der Schokoladenmasse vorgesehen ist und wobei eine Steuereinrichtung vorgesehen ist, die zumindest eine Zufuhr von Zutaten über die Zutatenöffnung steuert, wobei die Messanordnung mindestens einen Prozessgassensor aufweist, der in der Gehäuseanordnung angeordnet ist.

Conchieranordnungen sind aus dem Stand der Technik hinlänglich bekannt. Die Conchieranordnung dient im Wesentlichen dazu, während der Schokoladenherstellung durch ein spezielles Knet- bzw. Rührwerk den schmelzenden Charakter der Schokoladenmasse als Endprodukt zu ermöglichen. Hierzu kann die Schokoladenmasse nach dem Vermischen und Vermahlen der benötigten Zutaten der Conchieranordnung zugeführt werden. Zum Erzielen der erforderlichen Strukturwandlungen als Voraussetzung guter reologischer Eigenschaften muss die fein gewalzte Schokoladenmasse einer möglichst hohen mechanischen Beanspruchung unterzogen werden. Hierbei ist es erforderlich, diese mechanische Beanspruchung möglichst konstant zu halten, um reproduzierbare Ergebnisse der Schokoladenmasse zu erreichen. Um während des Conchierens eine Qualitätsermittlung durchzuführen, ist es beispielsweise aus der DE 196 44 271 A1 bekannt, den Motorstrom der Antriebseinrichtung des Knet- bzw. Rührwerks zu überwachen und zu messen, um auf Basis einer Veränderung des Motorstroms einen Rückschluss auf Veränderungen bei der Beanspruchung der Schokoladenmasse erzielen zu können. Ähnliche Anordnungen sind, bei denen Sensoren zur Gewichtverminderung oder zur Überwachung der Oberfflächenbeschaffenheit vorgesehen sind, sind, aus der US 2019/0373910 A1 sowie der EP 3 241 449 A1 bekannt. Auf Basis der Messergebnisse können dann die Anteile der zu dosierenden Mengen bspw. an Fett und Emulgator geändert werden. Es sollte deutlich sein, dass eine derartige Messanordnung große Ungenauigkeiten hinsichtlich der Beurteilung der Qualität der Schokoladenmasse zulässt, da diese Qualität von sehr viel mehr Faktoren abhängen kann, als von dem Mengenverhältnis von Fett und Emulgator, dass zudem lediglich durch eine Motorstromänderung grob qualitativ bestimmt wird.

Gattungsgemäße Anordnungen, bei denen bei einer Conchieranordnung mindestens ein Prozessgassensor vorgesehen ist, sind aus der WO 2018/196970 A1, WO 2019/018285 A2, der EP 0 879 562 B1 und dem Artikle "Using Chemical Sensors in Process Control" von T. A. Kuchmenko bekannt. Obwohl hierdurch die Qualität schon besser beurteilt werden kann, ist die Sensortechnik aufwendig und damit teuer ausgeführt.

Aufgabe der Erfindung ist es daher, den oben genannten Nachteil auf einfache und kostengünstige Weise zu vermeiden.

Diese Aufgabe wird dadurch gelöst, dass der Prozessgassensor in der mindestens einen Prozessgasöffnung vorgesehen, wobei der Prozessgassensor als Widerstandssensor zur Ermittlung der Konzentration sowie der Zusammensetzung von Kohlenstoffgasen ausgebildet. Der als Widerstandssensor ausgebildete Prozessgassensor ermittelt hierbei die Menge/Konzentration an organischen Gasen, wie zum Beispiel Essigsäuren, die während des Conchierprozesses ausgetrieben werden und aus der Gehäuseanordnung entweichen sowie die Zusammensetzung der Kohlenstoffgase. Anhand einer Bewertung dieser Gase ist es dann möglich, eine genauere Aussage über die benötigte Conchierdauer, der Zugabe von Zutaten, wie zum Beispiel Kakaobutter, Emulgatoren, Kakaomasse, etc., den zu leistenden Energieeintrag über das Knet- bzw. Rührwerk zu treffen sowie die aktive/passive Belüftung zu steuern und auch die Beendigung des Conchierprozesses genauer zu definieren. Die hierzu benötigten Anpassungen können dann durch die Steuereinrichtung vorgenommen werden.

In besonders vorteilhafter Weise kann der Prozessgassensor zur Ermittlung der Feuchtigkeit im Prozessgas ausgebildet sein. Alternativ kann natürlich auch ein weiterer Sensor zur Ermittlung der Feuchtigkeit vorgesehen sein.

Um spezifische Änderungen, die nicht eindeutig zuzuordnen sind, in der Schokoladenmasse zu detektieren, ist es vorteilhaft, wenn in der Gehäuseanordnung im Bereich der zu bearbeitenden Schokoladenmasse ein optischer Sensor vorgesehen ist. Hierbei ist es besonders vorteilhaft, wenn der optische Sensor als NDIR-Sensor ausgebildet ist, der anhand einer spektroskopischen Analyse eine qualitative Bewertung der physikalischen Eigenschaften der Schokoladenmasse vornimmt. Auch eine qualitative Bewertung der Vermischungsgüte ist hierdurch möglich.

In besonders vorteilhafter Weise ist in der Gehäuseanordnung eine vertikal wirkende Rührwerksanordnung vorgesehen, um die Scherkräfte in die Schokoladenmasse einzubringen. Hierdurch wird dann auch eine Austreibung der Kohlenstoffgase gezielt vorangetrieben. Es sollte deutlich sein, dass auch horizontal wirkende Rührwerksanordnungen oder auch Mischformen eingesetzt werden können.

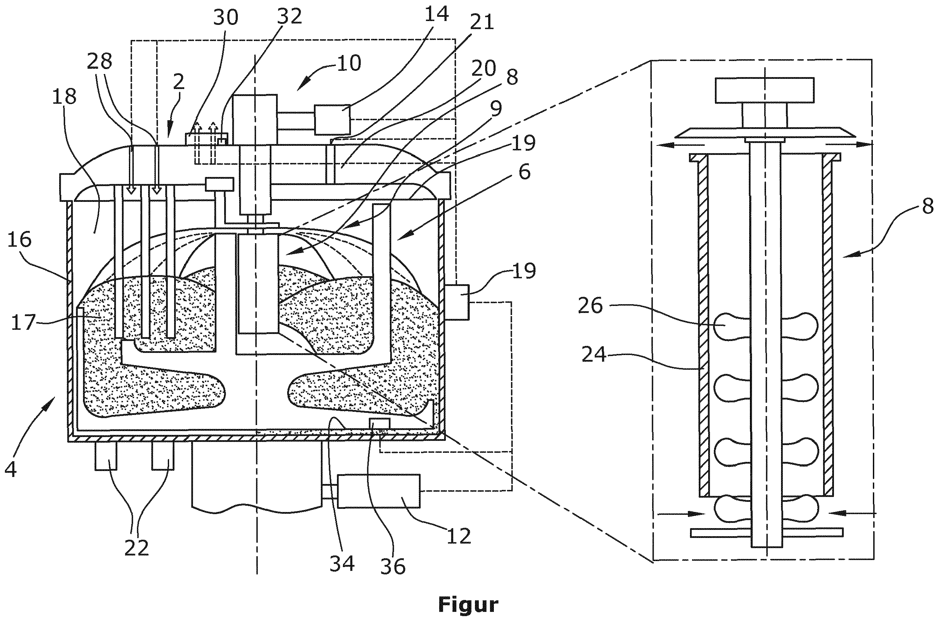

Die Erfindung wird anhand einer Zeichnung näher erläutert, hierbei zeigt die einzige Figur eine schematische Schnittansicht einer erfindungsgemäßen Conchieranordnung mit einem Detailausschnitt.

Die einzige Figur zeigt eine erfindungsgemäße Conchieranordnung 2 mit einer Gehäuseanordnung 4, in der ein erstes Rührwerk 6 und ein zweites Rührwerk 8, die zusammen eine Rührwerksanordnung 9 bilden, beweglich antreibbar gelagert sind und zusammen eine vertikale Rührwerksanordnung 10 bilden. Das erste Rührwerk 6 wird durch eine erste Antriebsmaschine 12 und das zweite Rührwerk 8 durch eine zweite Antriebsmaschine 14 angetrieben. Die Gehäuseanordnung 4 besteht im Wesentlichen aus einem einseitig geöffneten Zylinderteil 16 zur Aufnahme einer zu conchierenden Schokoladenmasse 17 in einem Conchierraum 18 und einem eine Öffnung 19 des Zylinderteils 16 verschließendes Deckelelements 20. Die Öffnung 19 dient auch als Schokoladenzufuhröffnung. Zudem ist eine Zutatenöffnung 21 vorgesehen, durch die Zutaten, wie zum Beispiel Kakaobutter, Emulgatoren, Kakaomasse, etc., zugeführt werden können. Am Bodenteil des Zylinderteils 16 sind auf bekannte Weise Schokoladenabführöffnungen 22 vorgesehen. In einem Detailausschnitt ist das zweite Rührwerk 8 dargestellt, bei dem die Schokoladenmasse im unteren Bereich in einen zylindrischen Behälter 24 mittels Schaufeln 26 nach oben geführt wird und dort den erforderlichen Scherkräften ausgesetzt wird, bevor es wieder in das Zylinderteil 16 geführt wird. Im Deckelteil 20 sind nun Frischluftöffnungen 28 zur Zuführung von konditionierter Frischluft (durch Pfeile angedeutet) vorgesehen. Zur Entgasung ist eine Prozessgasöffnung 30 vorgesehen, aus der während des Conchierprozesses entstehendes Abgas abgelassen werden kann. In der Prozessgasöffnung 30 ist ein Prozessgassensor 32 vorgesehen, der als Widerstandssensor zur Ermittlung eines Wertes ausgebildet ist, der die Konzentration von Kohlenstoffgasen und deren Zusammensetzung qualitativ sowie quantitativ abbildet. Dieser ist zusätzlich zur Ermittlung der Feuchtigkeit im Prozessgas ausgebildet. Im Bodenbereich 34 des Zylinderteils 16 ist darüber hinaus ein optischer Sensor 36 vorgesehen, der als NDIR-Sensor ausgebildet ist und der einer spektroskopischen Analyse der Schokoladenmasse 17 dient, um eine qualitative Bewertung derselben vornehmen zu können. Rein schematisch ist eine Steuereinrichtung 38 angedeutet, die die Zugabe von Zutaten, den zu leistenden Energieeintrag über das Knet- bzw. Rührwerk 6, 8 sowie die aktive/passive Belüftung sowie Entgasung steuern kann. Hierzu ist die Steuereinrichtung 38 über die Antriebsmaschinen 12, 14 mit dem ersten und zweiten Rührwerk 6, 8, der Zutatenöffnung 21, den Frischluftöffnungen 28, der Prozessgasöffnung 30 und mit dem Sensor 36 steuerungstechnisch verbunden. Die Steuereinrichtung 38 kann sowohl an der Conchieranordnung 2 als auch beabstandet hiervon vorgesehen sein.

## Patentansprüche

1. Conchieranordnung für eine Schokoladenmasse (17) mit einer Gehäuseanordnung (4), in der mindestens ein Knet- bzw. Rührwerk (6, 8) zum Einbringen von Scherkräften in die Schokoladenmasse (17) durch mindestens eine Antriebsmaschine (12, 14) antreibbar gelagert ist, wobei die Gehäuseanordnung (4) eine verschließbare Schokoladenzufuhröffnung (19), mindestens eine Zutatenöffnung (21), mindestens eine zeitweise zu öffnende Frischluftöffnung (28) und mindestens eine zeitweise zu öffnende Prozessgasöffnung (30) aufweist, wobei mindestens eine Messanordnung (32, 36) zur Qualitätsermittlung der Schokoladenmasse (17) vorgesehen ist und wobei eine Steuereinrichtung (38) vorgesehen ist, die zumindest eine Zufuhr von Zutaten über die Zutatenöffnung (21) steuert, wobei die Messanordnung (32, 36) mindestens einen Prozessgassensor (32) aufweist, der in der Gehäuseanordnung (4) angeordnet ist,
**dadurch gekennzeichnet, dass**
der Prozessgassensor (32) in der mindestens einen Prozessgasöffnung (30) vorgesehen ist, wobei der mindestens eine Prozessgassensor (32) als Widerstandssensor zur Ermittlung der Konzentration sowie der Zusammensetzung von Kohlenstoffgasen vorgesehen ist.

2. Conchieranordnung nach einem der Ansprüche 1,
**dadurch gekennzeichnet, dass**
der Prozessgassensor (32) zur Ermittlung der Feuchtigkeit im Prozessgas ausgebildet ist.

3. Conchieranordnung nach einem der vorhergehenden Ansprüche,
**dadurch gekennzeichnet, dass**
in der Gehäuseanordnung (4) im Bereich der zu bearbeitenden Schokoladenmasse (17) ein optischer Sensor (36) vorgesehen ist.

4. Conchieranordnung nach Anspruch 3,
**dadurch gekennzeichnet, dass**
der optische Sensor (36) als NDIR-Sensor ausgebildet ist, der anhand einer spektroskopischen Analyse eine qualitative Bewertung der physikalischen Eigenschaften der Schokoladenmasse (17) vornimmt.

5. Conchieranordnung nach einem der vorhergehenden Ansprüche,
**dadurch gekennzeichnet, dass**
in der Gehäuseanordnung (4) eine vertikal wirkende Rührwerksanordnung (9) vorgesehen ist.

## Claims

1. Conching arrangement for a chocolate mass (17) with a housing arrangement (4), in which at least one kneading or agitator mechanism (6, 8) for introducing shear forces into the chocolate mass (17) is mounted in such a way that it can be driven by at least one drive machine (12, 14), wherein the housing arrangement (4) comprises a closable chocolate feed opening (19), at least one ingredient opening (21), at least one fresh air opening (28) which is to be opened temporarily, and at least one process gas opening (30) which is to be opened temporarily, wherein at least one measuring arrangement (32, 36) for determining the quality of the chocolate mass (17) is provided, and wherein a control device (38) is provided, which controls at least a feed of ingredients via the ingredient opening (21), wherein the measuring arrangement (32, 36) comprises at least one process gas sensor (32) which is arranged within the housing arrangement (4),
**characterized in that**
the process gas sensor (32) is provided in the at least one process gas opening (30), wherein the at least one process gas sensor (32) is provided as a resistance sensor for determining the concentration as well as the composition of carbon gases.

2. Conching arrangement according to one of the claims 1,
**characterized in that**
the process gas sensor (32) is designed to determine the moisture in the process gas.

3. Conching arrangement according to one of the preceding claims,
**characterized in that**
an optical sensor (36) is provided within the housing arrangement (4) in the region of the chocolate mass (17) which is to be processed.

4. Conching arrangement according to claim 3,
**characterized in that**
the optical sensor (36) is designed as an NDIR sensor which performs a qualitative evaluation of the physical properties of the chocolate mass (17) based on a spectroscopic analysis.

5. Conching arrangement according to one of the preceding claims,
**characterized in that**
a vertically acting agitator arrangement (9) is provided within the housing arrangement (4).

## Revendications

1. Arrangement de conchage pour une masse de chocolat (17) avec un arrangement de boîtier (4), dans lequel au moins un appareil de pétrissage ou de malaxage (6, 8) est installé pour l'application de forces de cisaillement dans la masse de chocolat (17) est supporté de manière à pouvoir être entraîné par au moins une machine d'entraînement (12, 14), l'arrangement de boîtier (4) comprenant une ouverture d'alimentation en chocolat (19) pouvant être fermée, au moins une ouverture pour les ingrédients (21), au moins une ouverture pour l'air frais (28) pouvant être ouverte temporairement et au moins une ouverture pour le gaz de traitement (30) pouvant être ouverte temporairement, au moins un arrangement de mesure (32, 36) étant prévu pour déterminer la qualité de la masse de chocolat (17) et un dispositif de commande (38) étant prévu, qui commande au moins une addition d'ingrédients par l'ouverture pour les ingrédients (21), l'arrangement de mesure (32, 36) comprenant au moins un capteur de gaz de processus (32), qui est disposé dans l'arrangement de boîtier (4),
**caractérisé en ce que**
le capteur de gaz de processus (32) est prévu dans la au moins une ouverture de gaz de processus (30), le au moins un capteur de gaz de traitement (32) étant prévu comme capteur de résistance pour déterminer la concentration ainsi que la composition des gaz de carbone.

2. Arrangement de conchage selon l'une des revendications 1,
**caractérisé en ce que**
le capteur de gaz de processus (32) est conçu pour déterminer l'humidité dans le gaz de processus.

3. Arrangement de conchage selon l'une des revendications précédentes,
**caractérisé en ce que**
un capteur optique (36) est prévu dans l'arrangement de boîtier (4) dans la zone de la masse de chocolat (17) à traiter.

4. Arrangement de conchage selon la revendication 3,
**caractérisé en ce que**
le capteur optique (36) est conçu comme un capteur NDIR qui, à l'aide d'une analyse spectroscopique, procède à une évaluation qualitative des propriétés physiques de la masse de chocolat (17).

5. Arrangement de conchage selon l'une des revendications précédentes,
**caractérisé en ce que**
un agencement de mélangeur (9) à action verticale est prévu dans l'arrangement de boîtier (4).
